# EUROPEAN PATENT SPECIFICATION

(11) **EP 2 800 321 B1**
(45) Date of publication and mention of the grant of the patent: **17.06.2015**
(21) Application number: 14165523.3
(22) Date of filing: 23.04.2014
(51) Int. Cl.: H04L 12/713, H04L 12/24

(54) **A network element of a software-defined network**
Netzwerkelement eines Software-definierten Netzwerks
Élément de réseau d'un réseau défini par logiciel

(30) Priority: 03.05.2013 FI 20135462
(43) Date of publication of application: 05.11.2014
(73) Proprietor: Coriant Oy, 02630 Espoo (FI)
(72) Inventor: Hallivuori, Ville, 02610 Espoo (FI); Kuusisaari, Juhamatti, 00680 Helsinki (FI)
(74) Representative: Berggren Oy Ab

(56) References cited:
- US-A1- 2012 158 395
- SHRIRAM RAJAGOPALAN ET AL: "Split/Merge: System Support for Elastic Execution in Virtual Middleboxes", USENIX,, 11 April 2013 (2013-04-11), pages 1-14, XP061014321, [retrieved on 2013-04-11]
- HYOJOON KIM ET AL: "Improving network management with software defined networking", IEEE COMMUNICATIONS MAGAZINE, IEEE SERVICE CENTER, PISCATAWAY, US, vol. 51, no. 2, 1 February 2013 (2013-02-01), pages 114-119, XP011493791, ISSN: 0163-6804, DOI: 10.1109/MCOM.2013.6461195

## Description

### Field of the invention

The invention relates generally to a software-defined network "SDN". More particularly, the invention relates to a network element for a software-defined network and to a method and a computer program for configuring a network element of a software-defined network. Furthermore, the invention relates to a controller of a software-defined network.

### Background

Software-defined networking is an emerging architecture for data transfer networks. In a software-defined network "SDN", the control plane is separated from the data plane so that the control plane is implemented in one or more controllers that can be separate from the network elements and the data plane is implemented in the network elements. The network elements can be, for example, Internet Protocol "IP" routers, multiprotocol label switching "MPLS" nodes, packet optical switches, and/or Ethernet switches. Each network element may consist of a single apparatus or a combination of a plurality of apparatuses. Typically, the software-defined networking allows for quick experimenting and optimization of switching and/or routing policies and external access to the innards of network elements that formerly were closed and proprietary.

Internet Protocol "IP" based networks were initially built based on the concept of Autonomous Systems "AS". This concept allows networks to scale and extend by connected junctions that forward packets to a reasonable next hop based on partial need-to-know information. The AS principle works much like the traditional post office service, where a postal worker in a given city does not need to know all the tenants of all the streets in another city in order to choose a reasonable next hop for a letter at hand. This approach to networking is simple, and has proven resilient and scalable. This approach has, however, a few drawbacks. It does not allow the designated destinations, or tenants with home mail-boxes, to move without changing their identity as far as the packet delivery service is concerned. The topological location of destinations, which is the network interface they are attached to, dictates their identity related to the packet delivery service. In addition, using only the basic AS principle, it is hard to specify other qualities, such as logical grouping, access control, quality of service, intermediate network processing, or to specify aspects that relate to a sequence of packets that form a flow.

Using the analogy of the postal service, the software-defined networking works, for any given street location, so that all the letters from all the tenants would first be aggregated by a network element on an edge a software-defined network. This network element is configured to examine the current location for each of the letter-destinations using a global lookup mechanism. Based on that global lookup and on other globally defined and globally measured considerations, such as access control or remote location load conditions, the said network element places one or more of the original letters in an additional envelope addressed to each of the street locations where the destinations currently are. It then uses the normal postal service which works like the traditional Internet Protocol "IP" to get these outer envelopes to the remote locations. This is done based on the existing and scalable hop-by-hop forwarding services. The outer letters are then opened by a remote network element and the original envelopes are delivered to the destinations. It is to be noted that the above-presented analogy between the software-defined networking and the postal service is a strong simplification and it gives only a limited viewpoint about the versatile possibilities provided by the software-defined networking.

The software defined networking is, however, not free from challenges. Some of the challenges are related to configuring network elements so that different functional entities, e.g. line interface modules, of the network elements are constantly capable of carrying out the required tasks and so that the resources of the network elements are utilized in a sufficiently optimal way. Currently, there is still a need for technical solutions that are suitable for configuring network elements so that the above-mentioned goals are achieved. The publication XP 061014321 discloses configuring of network elements for a software-defined network.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new method for configuring a network element of a software-defined network "SDN". The network element comprises functional entities that are capable of transferring data between each other and that are configurable with configuration data received from a controller of the software-defined network. The functional entities comprise the line interface modules of the network element..

A method according to the invention comprises configuring, in accordance with the configuration data, at least one of the line interface modules of the network element to support external data-forwarding functionality between the network element and other network elements.

The method further comprises configuring, in accordance with the configuration data, at least two of the line interface modules to support:
- internal data-forwarding functionality within the network element and between the at least two of the line interface modules, and
- signaling functionality enabling at least one of the at least two line interface modules to control at least one other of the at least two line interface modules with signal data being determined at least partly in accordance with the configuration data and being additional to data received from the other network elements when the network element is operating in accordance with the configuration data.

As both the external and internal data-forwarding functionalities are configured according to the configuration data received from the controller of the software-defined network, the controller can be adapted to manage the interface modules as separately controlled devices. Therefore, the goal of the software-defined networking to provide controlled management of the data-forwarding functionality of a network element can be extended to line interface modules of the network element so that there can be controlled management of the data-forwarding functionalities of the line interface modules.

The above-mentioned signaling functionality can be used for providing internal functionalities of the network element. The signaling functionality can be used for implementing, for example, work sharing between the line interface modules. For example, a line interface module can determine actions to be directed to data being managed and order another line interface module to carry out the determined actions. The functionalities of the kind mentioned above can be cumbersome, if even possible, to be practiced between separate network elements. Hence, due to the signaling functionality, the line interface modules of the network element are more flexible for various modes of co-operation than a mere set of separate network elements.

As mentioned earlier in this document, the controller of the software-defined network can be adapted to manage the line interface modules of the network element as separately controlled devices, i.e. at least in some extent as if the line interface modules were separate network elements. On the other hand, the signaling functionality makes it possible to provide such internal functionalities of the network element which would be at least cumbersome to implement if the line interface modules were separate network elements. Also the internal functionalities, such as the above-mentioned work sharing, can be arranged to be controllable via the controller of the software-defined network because the signaling functionality between the line interface modules is configured according to the configuration data received from the controller.

In accordance with the invention, there is provided also a new network element for a software-defined network. The network element can be, for example, an Internet Protocol "IP" router, a multiprotocol label switching "MPLS" switch, a packet optical switch, and/or an Ethernet switch. A network element according to the invention comprises functional entities capable of transferring data between each other. At least one of the functional entities is capable of receiving data from outside of the network element, at least one of the functional entities is capable of transmitting data out from the network element, and each of the functional entities is configurable with configuration data received from a controller of the software-defined network. The functional entities comprise the line interface modules of the network element.

The network element comprises a processing system adapted to configure, in accordance with the configuration data, at least one of the line interface modules of the network element to support external data-forwarding functionality between the network element and other network elements.

The processing system is further adapted to configure, in accordance with the configuration data, least two of the line interface modules to support:
- internal data-forwarding functionality within the network element and between the at least two of the line interface modules, and
- signaling functionality enabling at least one of the at least two line interface modules to control at least one other of the at least two line interface modules with signal data being determined at least partly in accordance with the configuration data and being additional to data received from the other network elements when the network element is operating in accordance with the configuration data.

The above-mentioned processing system for configuring the line interface modules can be located for example in one of the functional entities, i.e. in a control unit, adapted to configure the other functional entities in a centralized manner. It is also possible that the processing system is decentralized in the functional entities so that each functional entity is capable of configuring itself. Furthermore, it is also possible that the processing system is decentralized in some of the functional entities so that certain functional entities are capable of configuring themselves and other functional entities too.

In accordance with the invention, there is provided also a new controller for configuring a network element of a software-defined network. The controller can be a single apparatus or a combination of a plurality of apparatuses capable of communicating with each other. A controller according to the invention comprises:
- a processing system for forming configuration data for the network element, and
- a data transfer interface for transmitting the configuration data to the network element,
wherein the configuration data defines:
- external data-forwarding functionality between the network element and other network elements,
- internal data-forwarding functionality within the network element and between line interface modules of the network element, and
- signaling functionality enabling at least one of the line interface modules to control at least one other of the line interface modules with signal data being determined at least partly in accordance with the configuration data and being additional to data received from the other network elements when the network element is operating in accordance with the configuration data.

In accordance with the invention, there is provided also a new software-defined network that comprises one or more network elements according to the invention and a controller according to the invention. It is to be noted that the controller or one or more parts of it can also act as one or more network elements that can be e.g. an Internet Protocol "IP" router, a multiprotocol label switching "MPLS" node, a packet optical switch, and/or an Ethernet switch.

In accordance with the invention, there is provided also a new computer program for configuring a network element of a software-defined network, where the network element comprises functional entities capable of transferring data between each other, at least one of the functional entities being capable of receiving data from outside of the network element, at least one of the functional entities being capable of transmitting data out from the network element, and each of the functional entities being configurable with configuration data received from a controller of the software-defined network. The functional entities comprise the line interface modules of the network element.

A computer program according to the invention comprises computer executable instructions for controlling a programmable processing system of the network element to configure, in accordance with the configuration data, at least one of the line interface modules of the network element to support external data-forwarding functionality between the network element and other network elements.

The computer program further comprises computer executable instructions for controlling the programmable processing system to configure, in accordance with the configuration data, at least two of the line interface modules of the network element to support:
- internal data-forwarding functionality within the network element and between the at least two of the line interface modules, and
- signaling functionality enabling at least one of the at least two line interface modules to control at least one other of the at least two line interface modules with signal data being determined at least partly in accordance with the configuration data and being additional to data received from the other network elements when the network element is operating in accordance with the configuration data.

In accordance with the invention, there is provided also a new computer program product. The computer program product comprises a non-volatile computer readable medium, e.g. a compact disc "CD", encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied depending claims are mutually freely combinable unless otherwise explicitly stated. Furthermore, it is to be understood that the use of "a" or "an", i.e. a singular form, throughout this document does not exclude a plurality.

### Brief description of the figures

The exemplifying and non-limiting embodiments of the invention and their advantages are explained in greater detail below with reference to the accompanying drawings, in which:
figure 1 shows a schematic illustration of a software-defined network comprising network elements according to an exemplifying embodiment of the invention and a controller according to an exemplifying embodiment of the invention,
figure 2 shows a schematic illustration of a controller according to an exemplifying embodiment of the invention for configuring a network element of a software-defined network,
figure 3 shows a schematic illustration of a network element according to an exemplifying embodiment of the invention, and
figure 4 shows a flow chart of a method according to an exemplifying embodiment of the invention for configuring a network element of a software-defined network.

### Description of exemplifying embodiments

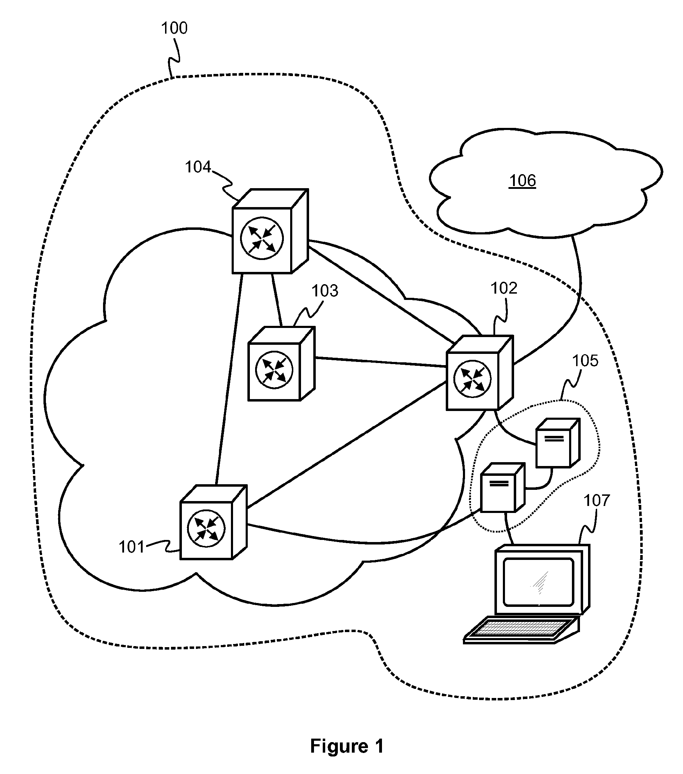

Figure 1 shows a schematic illustration of an exemplifying software-defined network "SDN" 100. The software-defined network comprises network elements 101, 102, 103, and 104 and a controller 105. The network elements 101-104 of this exemplifying software-defined network are mutually interconnected with data transfer links as illustrated in figure 1. Furthermore, the exemplifying software-defined network "SDN" 100 may comprise other network elements that are not shown in figure 1. Each of the network elements may be e.g. an Internet Protocol "IP" router, a multiprotocol label switching "MPLS" node, a packet optical switch, and/or an Ethernet switch. Each network element may consist of a single apparatus or a combination of a plurality of apparatuses. As well, the controller 105 may consist of a single apparatus or a combination of a plurality of apparatuses. In the exemplifying case illustrated in figure 1, the controller 105 comprises two interconnected apparatuses. A terminal device 107 is connected to the controller 105 and the network element 102 acts as a gateway to an external network 106 that can be e.g. the global Internet. The controller 105 comprises a data transfer interface for receiving data from the terminal device 107 and/or from one or more other devices connected with data transfer links to the data transfer interface of the controller. It is to be noted that the controller 105 or one or more parts of it can also act as one or more network elements that can be e.g. an Internet Protocol "IP" router, a multiprotocol label switching "MPLS" switch, a packet optical switch, and/or an Ethernet switch.

The controller 105 is adapted to send, to at least one of the network elements 101-104, configuration data that comprises data items for configuring the network element under consideration to maintain a configuration system that enables the network element to manage data in a desired manner. The data can be in form of data frames such as for example Internet Protocol IP-packets, MPLS-labeled frames, Ethernet frames, or the data can be in some other form accordant with one or more data transfer protocols being used. The controller 105 can be adapted to configure the network element under consideration in accordance with the ForCES or some other suitable protocol. More details about the ForCES can be found from the Request for Comments "RFC": 3746 *"Forwarding and Control Element Separation",* the Internet Engineering Task Force "IETF", Network Working Group. Furthermore, the configuration data that is sent to one or more of the network elements 101-104 may comprise one or more configuration programs each of which comprising one or more computer executable instructions defining an action or a chain of actions to be executed in conjunction with managing data in the network element under consideration. The action or the chain of actions defined by the configuration program may comprise for example: recording data into a memory, modifying the data, selecting one or more of egress ports of the network element and forwarding the data and its possible duplicates to the selected one or more egress ports, selecting one or more look-up tables of a configuration system of the network element and executing one or more look-ups from the selected look-up tables, performing arithmetic operations, branching operations, performing logical operations, reading metadata associated with the data being managed, writing metadata associated with the data, modifying metadata associated with the data, dropping the data, and/or duplicating the data.

At least one of the network elements 101-104 is assumed have a modular structure so that the network element under consideration comprises functional entities capable of transferring data between each other. Each functional entity can be, for example, a line interface module of the network element or a part of a line interface module such as an egress-side of the line interface module or an ingress-side of the line interface module. On the other hand, it is also possible that a functional entity includes two or more separate physical entities. For example, a functional entity may comprise e.g. a line interface module and e.g. a switch fabric module. Furthermore, it is also possible that two functional entities share a same physical entity, e.g. a first functional entity may comprise a first line interface module and a switch fabric module, and a second functional entity may comprise a second line interface module and the switch fabric module. The functional entities considered here are configurable with configuration data received from the controller 105. It is, naturally possible that the network element under consideration comprises also such functional entities which are not configurable with the said configuration data.

One or more of the line interface modules of the network element under consideration are configured, in accordance with the configuration data, to support external data-forwarding functionality between the network element and the other network elements of the software-defined network 100. When practicing the external data-forwarding functionality, the above-mentioned one or more line interface modules make the network element under consideration to forward received data to appropriate ones of the other network elements. Thus, the external data-forwarding functionality makes the network elements of the software-defined network to communicate with each other in an appropriate way.

Two or more of the line interface modules of the network element under consideration are configured, in accordance with the above-mentioned configuration data, to support internal data-forwarding functionality between these line interface modules. When practicing the internal data-forwarding functionality, these line interface modules forward data to appropriate one or ones of the other line interface modules within the network element under consideration. Thus, the internal data-forwarding functionality makes the line interface modules to communicate with each other in an appropriate way. The line interface modules supporting the internal data-forwarding functionality may be those of the line interface modules supporting the external data-forwarding functionality. It is also possible that one or more of the line interface modules supporting the internal data-forwarding functionality do not necessarily support the external data-forwarding functionality, and/or vice versa. A line interface module supporting the external data-forwarding functionality does not necessarily need to support the internal data-forwarding functionality for example in a case where the line interface module supporting the external data-forwarding functionality is connected to only one other line interface module and the other line interface module supports the internal data-forwarding functionality. In this case, the line interface module supporting the external data-forwarding functionality forwards all data to be managed elsewhere in the network element to the other line interface module by default. A functional entity supporting the internal data-forwarding functionality does not necessarily need to support the external data-forwarding functionality for example in a case where the functional entity supporting the internal data-forwarding functionality is a switch fabric connected to line interface modules and a line interface modules that has received data from outside of the network element defines, on the basis of headers or other control portions of the data, one or more line interface modules which will transmit the data out from the network element, and the line interface module that has received the data instructs the switch fabric accordingly.

As both the external and the internal data-forwarding functionalities are configured in accordance with the configuration data provided by the controller 105, the controller 105 is capable of managing the line interface modules or ingress and egress sides of a line interface module, as separately controlled devices.

Two or more of the line interface modules of the network element under consideration are configured, in accordance with the above-mentioned configuration data, to support signaling functionality between these line interface modules. The signaling functionality enables a line interface module to control at least one other line interface module with signal data that is determined at least partly in accordance with the configuration data. The signaling functionality can be used for implementing internal functionalities of the network element. The internal functionalities may comprise, for example, work sharing between the line interface modules so that a line interface module acting as an ingress side, determines actions to be directed to data being managed and orders a line interface module acting as an egress side to carry out the determined actions. The order to carry out the determined actions represents an example of the signal data used in the signaling functionality. Actions determined by a line interface module and carried out by one or more other line interface modules may comprise for example: modification of a control data portion of data being managed, modification of the payload data portion of data being managed, duplicating data, tunneling data, discarding data and sending a notice to the source and/or destination of the data, directing a forward error correction "FEC" to data, etc. The modification of the control data portion may comprise for example encapsulation of data, changing an MPLS label, changing a destination address, and/or encrypting or decrypting the control data portion. Furthermore, the internal functionalities implemented with the signaling functionality may comprise for example: instructions sent by line interface modules to a switch fabric, gathering statistics so that a line interface module that is managing data orders another line interface module to update counters and/or other statistical variables, and/or security functionalities e.g. so that a line interface module that is managing data orders another line interface module to check whether the data is eligible for further processing.

The above-mentioned signaling functionality is capable of using signal data which is at least partly additional to data received from the other network elements when the network elements 101-104 are operating in practical use in accordance with the configuration data, i.e. when the network elements are in their normal use. Thus, the signal data is not bound to any data transfer protocols and data formats being used between the network elements. Therefore, the signaling functionality provides more versatile and flexible control possibilities to between the line interface modules than in a case where the line interface modules would be separate network elements. Separate network elements communicate according to standardized data transfer protocols having inherent limitations, and between the separate network elements it is at least cumbersome to transfer data whose treatment is unfinished, e.g. actions relating to forwarding and/or security have been determined but not yet accomplished.

As mentioned earlier in this document, the controller 105 is capable of managing the line interface modules of the network element under consideration as separately controlled devices, i.e. at least in some extent as if the line interface modules were separate network elements. On the other hand, the signaling functionality makes it possible to provide such internal functionalities of the network element which would be at least cumbersome to implement if the line interface modules were separate network elements. Also the internal functionalities can be arranged to be controllable via the controller 105 of the software-defined network because the signaling functionality between the line interface modules is configured according to the configuration data received from the controller.

The network element under consideration is advantageously adapted recognize module-specific portions from the configuration data received from the controller 105, and allocate the module-specific portions of the configuration data to respective ones of the line interface modules. Thereafter, each line interface module can be configured individually on the basis of the relevant module-specific portion of the configuration data. Hence, the controller 105 can be adapted to customize the forwarding systems implemented in the line interface modules. Thus, it is not necessary to use a same forwarding system, e.g. a same look-up table system, in different line interface modules.

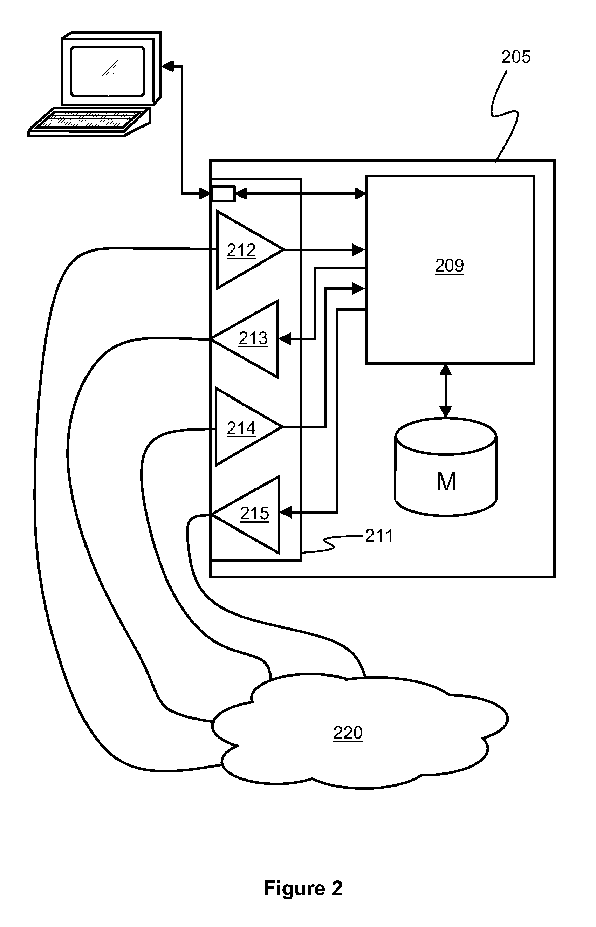

Figure 2 shows a schematic illustration of a controller 205 according to an exemplifying embodiment of the invention for configuring a network element of a software-defined network. In this exemplifying case, the controller is a single apparatus but, as mentioned earlier in this document, the controller could as well be a combination of a plurality of apparatuses. The controller comprises a data transfer interface 211 for receiving data and for transmitting data. The data transfer interface 211 comprises ingress ports 212 and 214 and egress ports 213 and 215 for connecting via data transfer links to a data transfer network 220. The controller comprises a processing system 209 adapted to construct configuration data that enables line interface modules of the network element to be configured so that the network element is able to operate as a part of the software-defined network. The processing system 209 is further adapted to control the data transfer interface 211 to send the configuration data to the network element to be configured.

The configuration data defines external data-forwarding functionality between the network element and other network elements so as to configure the network element to communicate with the other network elements in an appropriate way. The configuration data further defines internal data-forwarding functionality between the line interface modules of the network element. When practicing the internal data-forwarding functionality, a line interface module under consideration forwards data to appropriate one or ones of the other line interface modules within the network element. The configuration data further defines signaling functionality enabling at least one of the line interface modules to control at least one other of the line interface modules with signal data being determined at least partly in accordance with the configuration data and being additional to data received from the other network elements when the network element is operating in accordance with the configuration data. The signaling functionality makes it possible to configure, via the controller 205, internal functionalities of the network element under consideration, e.g. work sharing between line interface modules.

In a controller according to an exemplifying embodiment of the invention, the processing system 209 is adapted to form separate module-specific portions of the configuration data for the line interface modules of the network element and to provide the module-specific portions of the configuration data with entity-identifiers. Therefore, the network element under consideration is enabled to allocate the module-specific portions of the configuration data to the respective ones of the line interface modules and to configure each of the line interface modules with an appropriate module-specific portion of the configuration data. Thus, the controller 205 can control each of the line interface modules separately and individually so that the controller can define, for example, look-up table systems in a module-specific manner. The controller is advantageously made aware of the modular structure of the network element under consideration so as to enable the controller to form the module-specific portions of the configuration data. For example, the controller can be made aware of the types of the line interface modules and aware of the topology of data transfer links between the line interface modules.

The processing system 209 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA".

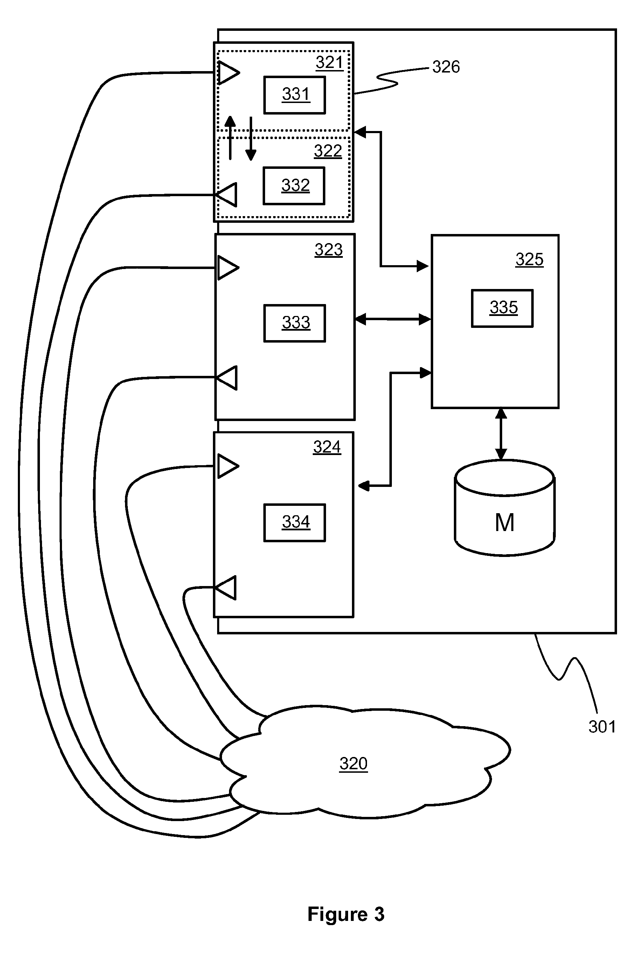

Figure 3 shows a schematic illustration of a network element 301 according to an exemplifying embodiment of the invention for a software-defined network. The network element can be, for example, an Internet Protocol "IP" router, a Multiprotocol label switching "MPLS" switch, a packet optical switch, and/or an Ethernet switch. The network element comprises functional entities 321, 322, 323, 324 and 325. In this exemplifying case, the functional entities 321, 323 and 324 comprise receivers for receiving data from outside of the network element, i.e. from a data transfer network 320, and the functional entities 322, 323 and 324 comprise transmitters for transmitting data out from the network element, i.e. to the data transfer network 320. The functional entities 323 and 324 are line interface modules, the functional entity 321 is an ingress side of a line interface module 326, and the functional entity 322 is an egress side of the line interface module 326. The functional entity 325 is a control unit. The functional entity 325 could also act a switching entity that provides data transfer connections between the line interface modules of the network element. It is also possible that the line interface modules are full mesh connected so that each line interface module has a direct data transfer connection to any other line interface module. Each of the functional entities 321-325 is configurable with configuration data received from a controller of the software-defined network. The network element 301 may further comprise such functional entities which are not configurable with the configuration data. Functional entities which are not configurable with the configuration data are not shown in figure 2.

The network element 301 comprises a processing system adapted to configure, in accordance with the configuration data received from the controller, the functional entities to 321-324 to support external data-forwarding functionality between the network element and other network elements so as to configure the network element to communicate with the other network elements in an appropriate way. The processing system is further adapted to configure, in accordance with the configuration data, the functional entities 321-325 to support internal data-forwarding functionality between these functional entities. Thus, the functional entities are configured to communicate with each other in a desired way. The processing system is further adapted to configure, in accordance with the configuration data, the functional entities 321-325 to support signaling functionality enabling the functional entities 321-325 to control each other with signal data that is determined at least partly in accordance with the configuration data and that is additional to data received from the other network elements when the network element 301 is operating in practical use in accordance with the configuration data. The signaling functionality makes it possible to configure internal functionalities of the network element 301, e.g. work sharing between the functional entities 321-325, via the controller of the software-defined network.

The above-mentioned processing system can be located in a one of the functional entities, i.e. in a control unit, adapted to configure the other functional entities in a centralized manner. It is also possible that the processing system is decentralized in the functional entities so that each functional entity is capable of configuring itself. Furthermore, it is also possible that the processing system is decentralized in some of the functional entities so that certain functional entities are capable of configuring themselves and other functional entities too. In the exemplifying case illustrated in figure 2, the above-mentioned processing system can be a functional block 335 when the functional entities 321-324 are configured in a centralized manner. For another example, the processing system may comprise the functional block 335 and functional blocks 331, 332, 333, and 334 when each of the functional entities 321-325 is adapted to configure itself. The functional blocks 331-335 can also comprise means for implementing forwarding systems for supporting the external and internal data-forwarding functionalities. Each forwarding system may comprise a look-up table system constructed in accordance with the configuration data received from the controller of the software defined network.

Each of the functional blocks 331-335 can be implemented with one or more processor circuits, each of which can be a programmable processor circuit provided with appropriate software, a dedicated hardware processor such as, for example, an application specific integrated circuit "ASIC", or a factory configurable hardware processor such as, for example, a field programmable gate array "FPGA". The functional blocks 331 and 332 that belong to the same line interface module 326 can be implemented with same hardware.

In a network element according to an exemplifying embodiment of the invention, the processing system is adapted to configure, in accordance with the configuration data, one or more of the functional entities 321-325 to be capable of setting metadata to be accessible to at least one other of the functional entities 321-324 when forwarding a data entity in accordance with the internal data-forwarding functionality. The metadata is related to the data entity and the metadata may contain, for example, an order to direct specified actions to the data entity in one or more of those functional entities which manage this data entity. The making the metadata to be accessible to the at least one other of the functional entities 321-325 is an example of the above-mentioned signaling functionality and the above-mentioned metadata is an example of the signal data.

The processing system can be adapted to configure, in accordance with the configuration data, one or more of the functional entities 321-325 to be capable of attaching the above-mentioned metadata to the data entity to be forwarded so that the metadata is forwarded together with the data entity in accordance with the internal data-forwarding functionality. It is also possible that the processing system is adapted to configure, in accordance with the configuration data, one or more of the functional entities 321-325 to be capable of placing the metadata to a memory that is accessible to the at least one other of the functional entities 321-325.

In a network element according to an exemplifying embodiment of the invention, the processing system is adapted recognize entity-specific portions from the configuration data, allocate the entity-specific portions of the configuration data to respective ones of the functional entities, and configure the functional entities on the basis of the entity-specific portions of the configuration data. The controller of the software-defined network is advantageously made aware of the modular structure of the network element 301 so as to enable the controller to form the entity-specific portions of the configuration data. For example, the controller can be made aware of the types of the functional entities 321-325 and aware of the topology of data transfer links between the functional entities. In an exemplifying case where the functional entities 321-324 are configured in a centralized manner, the above-mentioned processing system can be the functional block 335. In this case, the functional block 335 can be adapted to recognize the entity-specific portions from the configuration data and to configure each of the functional entities 321-325 on the basis of the relevant entity-specific portion of the configuration data. In another exemplifying case where each functional entity configures itself, the above-mentioned processing system can comprise the functional blocks 331-335. In this case, each of the functional blocks 331-335 recognizes, from the configuration data, the entity-specific portion that is relevant to the functional entity under consideration and configures the functional entity in accordance with the relevant entity-specific portion of the configuration data.

In a network element according to an exemplifying embodiment of the invention, the processing system is adapted to configure, in accordance with the configuration data, the functional entity 321, i.e. the egress side of the line interface module 326, to be capable of forwarding data to the functional entity 322, i.e. the ingress side of the line interface module 326, in response to a situation in which the data is deemed to need processing related to the ingress side of the line interface module. This provides an option to go back to the ingress side if needed. In a network element according to an exemplifying embodiment of the invention, the ingress and egress sides of two or more of the line interface modules are handled as separate functional entities. This provides an option to send data from an egress side of a line interface module back to the ingress side of another line interface module which has originally received the data from the data transfer network. The need for returning data back to the ingress side may take place for example when a look-up at the egress side indicates that data under consideration needs to be forwarded also or solely to a destination other than those accessible via the current line interface module.

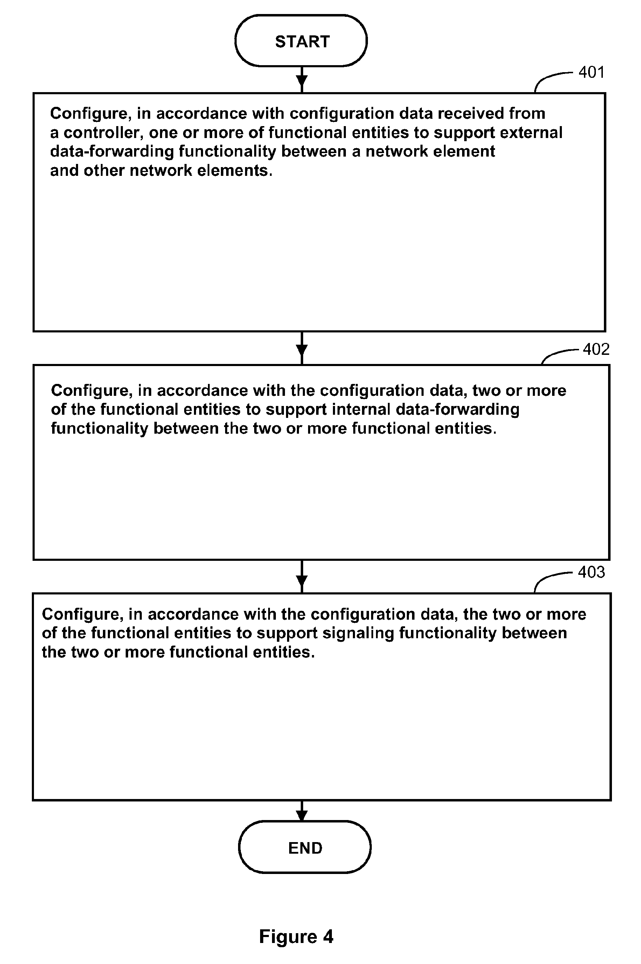

Figure 4 shows a flow chart of a method according to an exemplifying embodiment of the invention for configuring a network element of a software-defined network. The network element comprises functional entities capable of transferring data between each other, at least one of the functional entities being capable of receiving data from outside of the network element, at least one of the functional entities being capable of transmitting data out from the network element, and each of the functional entities being configurable with configuration data received from a controller of the software-defined network. The above-mentioned functional entities comprise the line interface modules of the network element. The method comprises the following actions:
- action 401: configuring, in accordance with the configuration data, at least one of the functional entities to support external data-forwarding functionality between the network element and other network elements,
- action 402: configuring, in accordance with the configuration data, at least two of the functional entities to support internal data-forwarding functionality between the at least two of the functional entities, and
- action 403: configuring, in accordance with the configuration data, the at least two of the functional entities to support signaling functionality enabling a first one of the at least two functional entities to control at least one other of the at least two functional entities with signal data being determined at least partly in accordance with the configuration data and being additional to data received from the other network elements when the network element is operating in accordance with the configuration data.

The first one of the at least two functional entities can be for example a line interface module comprising a receiver for receiving data from outside of the network element and a transmitter for transmitting data out from the network element. The at least one other of the at least two functional entities can be as well a line interface module comprising a receiver for receiving data from outside of the network element and a transmitter for transmitting data out from the network element.

For another example, the first one of the at least two functional entities can be an ingress side of a line interface module comprising a receiver for receiving data from outside of the network element, and the at least one other of the at least two functional entities can be an egress side of this line interface module comprising a transmitter for transmitting data out from the network element, or the at least one other of the at least two functional entities can be an egress side of another line interface module of the network element. The egress side can be configured, in accordance with the control data, forward data to the ingress side in response to a situation in which the data is deemed to need processing related to the ingress side.

A method according an exemplifying embodiment of the invention comprises configuring the first one of the at least two functional entities to set metadata to be accessible to the at least one other of the at least two functional entities so as to control the at least one other of the at least two functional entities in response to forwarding a data entity in accordance with the internal data-forwarding functionality. The metadata is related to the data entity and it represents an example of the signal data related to the signaling function.

A method according an exemplifying embodiment of the invention comprises configuring the first one of the at least two functional entities to attach the metadata to the data entity to be forwarded so that the metadata is forwarded together with the data entity in accordance with the internal data-forwarding functionality.

A method according an exemplifying embodiment of the invention comprises configuring the first one of the at least two functional entities to place the metadata to a memory accessible to the at least one other of the at least two functional entities.

A method according an exemplifying embodiment of the invention comprises recognizing entity-specific portions from the configuration data received from the controller of the software-defined network, allocating the entity-specific portions of the configuration data to respective ones of the functional entities, and configuring each of the functional entities in accordance with the respective entity-specific portion of the configuration data.

A computer program according to an exemplifying embodiment of the invention for configuring a network element of a software-defined network comprises computer executable instructions for controlling a programmable processing system to carry out a method according to any of the above-described exemplifying embodiments of the invention.

A computer program according to an exemplifying embodiment of the invention comprises software modules for configuring a network element of a software-defined network. The network element comprises functional entities capable of transferring data between each other, at least one of the functional entities being capable of receiving data from outside of the network element, at least one of the functional entities being capable of transmitting data out from the network element, and each of the functional entities being configurable with configuration data received from a controller of the software-defined network. The above-mentioned functional entities comprise the line interface modules of the network element.

The software modules comprise computer executable instructions for controlling a programmable processing system of the network element to:
- configure, in accordance with the configuration data, at least one of the functional entities to support external data-forwarding functionality between the network element and other network elements,
- configure, in accordance with the configuration data, at least two of the functional entities to support internal data-forwarding functionality between the at least two of the functional entities, and
- configure, in accordance with the configuration data, the at least two of the functional entities to support signaling functionality enabling a first one of the at least two functional entities to control at least one other of the at least two functional entities with signal data being determined at least partly in accordance with the configuration data and being additional to data received from the other network elements when the network element is operating in accordance with the configuration data.

The software modules can be e.g. subroutines or functions implemented with a suitable programming language and with a compiler suitable for the programming language and the programmable processing system.

A computer program product according to an exemplifying embodiment of the invention comprises a computer readable medium, e.g. a compact disc "CD", encoded with a computer program according to an exemplifying embodiment of invention.

A signal according to an exemplifying embodiment of the invention is encoded to carry information defining a computer program according to an exemplifying embodiment of invention.

The specific examples provided in the description given above should not be construed as limiting the scope and/or the applicability of the appended claims.

## Claims

1. A network element (301) for a software-defined network, the network element comprising line interface modules (321-324) capable of transferring data between each other, at least one of the line interface modules being capable of receiving data from outside of the network element, at least one of the line interface modules being capable of transmitting data out from the network element, and each of the line interface modules being configurable with configuration data received from a controller of the software-defined network, wherein the network element comprises a processing system (335, 331-334) adapted to configure, in accordance with the configuration data, at least one of the line interface modules to support:
- external data-forwarding functionality between the network element and other network elements,
**characterized in that** the processing system is further adapted to configure, in accordance with the configuration data, at least two of the line interface modules to support:
- internal data-forwarding functionality within the network element and between the at least two of the line interface modules, and
- signaling functionality enabling a first one of the at least two line interface modules to control at least one other of the at least two line interface modules with signal data being determined at least partly in accordance with the configuration data and being additional to data received from the other network elements when the network element is operating in accordance with the configuration data.

2. A network element according to claim 1, wherein the processing system is adapted to configure, in accordance with the configuration data, the first one of the at least two line interface modules to set metadata to be accessible to the at least one other of the at least two line interface modules so as to control the at least one other of the at least two line interface modules in response to forwarding a data entity in accordance with the internal data-forwarding functionality, the metadata relating to the data entity and representing the signal data.

3. A network element according to claim 2, wherein the processing system is adapted to configure, in accordance with the configuration data, the first one of the at least two line interface modules to attach the metadata to the data entity so that the metadata is forwarded together with the data entity in accordance with the internal data-forwarding functionality.

4. A network element according to claim 2, wherein the processing system is adapted to configure, in accordance with the configuration data, the first one of the at least two line interface modules to place the metadata to a memory accessible to the at least one other of the at least two line interface modules.

5. A network element according to any of claims 1-4, wherein the processing system is adapted recognize module-specific portions from the configuration data, allocate the module-specific portions of the configuration data to respective ones of the line interface modules, and configure each of the line interface modules in accordance with the respective module-specific portion of the configuration data.

6. A network element according to any of claims 1-5, wherein the processing system (335) is located in a one of the line interface modules adapted to configure the other line interface modules in accordance with the configuration data.

7. A network element according to any of claims 1-5, wherein the processing system (331-334) is decentralized in the line interface modules and one or more of the line interface modules are adapted to configure themselves in accordance with the configuration data.

8. A network element according to any of claims 1-7, wherein the first one of the at least two line interface modules is a line interface module comprising a receiver for receiving data from outside of the network element and a transmitter for transmitting data out from the network element.

9. A network element according to any of claims 1-7, wherein the first one (321) of the at least two line interface modules is an ingress side of a line interface module (326) comprising a receiver for receiving data from outside of the network element, and a second one (322) of the at least two line interface modules is an egress side of the line interface module comprising a transmitter for transmitting data out from the network element.

10. A network element according to claim 9, wherein the processing system is adapted to configure, in accordance with the configuration data, the second one of the at least two line interface modules to forward data to the first one of the at least two line interface modules in response to a situation in which the data is deemed to need processing related to the ingress side of the line interface module.

11. A network element according to any of claims 1-11, wherein the network element is at least one of the following: an Internet Protocol IP router, a MultiProtocol Label Switching MPLS switch, a packet optical switch, an Ethernet switch.

12. A controller (205) for configuring a network element of a software-defined network, the controller comprising:
- a processing system (209) for forming configuration data for the network element, and
- a data transfer interface (211) for transmitting the configuration data to the network element,
wherein the configuration data defines external data-forwarding functionality between the network element and other network elements, **characterized in that** the configuration data further defines:
- internal data-forwarding functionality within the network element and between line interface modules of the network element, and
- signaling functionality enabling at least one of the line interface modules to control at least one other of the line interface modules with signal data being determined at least partly in accordance with the configuration data and being additional to data received from the other network elements when the network element is operating in accordance with the configuration data.

13. A controller according to claim 12, wherein the processing system is adapted to form module-specific portions of the configuration data for the line interface modules of the network element and to provide the module-specific portions of the configuration data with entity-identifiers so as to enable the network element to allocate the module-specific portions of the configuration data to respective ones of the line interface modules and to configure each of the line interface modules with an appropriate module-specific portion of the configuration data.

14. A method for configuring a network element of a software-defined network, the network element comprising line interface modules capable of transferring data between each other, at least one of the line interface modules being capable of receiving data from outside of the network element, at least one of the line interface modules being capable of transmitting data out from the network element, and each of the line interface modules being configurable with configuration data received from a controller of the software-defined network, the method comprising:
- configuring (401), in accordance with the configuration data, at least one of the line interface modules to support external data-forwarding functionality between the network element and other network elements,
**characterized in that** method further comprises configuring (402, 403), in accordance with the configuration data, at least two of the line interface modules to support:
- internal data-forwarding functionality within the network element and between the at least two of the line interface modules, and
- signaling functionality enabling a first one of the at least two line interface modules to control at least one other of the at least two line interface modules with signal data being determined at least partly in accordance with the configuration data and being additional to data received from the other network elements when the network element is operating in accordance with the configuration data.

15. A computer program for configuring a network element of a software-defined network, the network element comprising line interface modules capable of transferring data between each other, at least one of the line interface modules being capable of receiving data from outside of the network element, at least one of the line interface modules being capable of transmitting data out from the network element, and each of the line interface modules being configurable with configuration data received from a controller of the software-defined network, the computer program comprising computer executable instructions for controlling a programmable processing system of the network element to:
- configure, in accordance with the configuration data, at least one of the line interface modules to support external data-forwarding functionality between the network element and other network elements,
**characterized in that** the computer program further comprises computer executable instructions for controlling the programmable processing system of the network element to configure, in accordance with the configuration data, at least two of the line interface modules to support:
- internal data-forwarding functionality within the network element and between the at least two of the line interface modules, and
- signaling functionality enabling a first one of the at least two line interface modules to control at least one other of the at least two line interface modules with signal data being determined at least partly in accordance with the configuration data and being additional to data received from the other network elements when the network element is operating in accordance with the configuration data.

## Patentansprüche

1. Netzwerkelement (301) für ein Software-definiertes Netzwerk, das Netzwerkelement aufweisend Leitungsschnittstellenmodule (321-324), die Daten untereinander übertragen können, wobei zumindest eines der Leitungsschnittstellenmodule Daten von außerhalb des Netzwerkelements empfangen kann, wobei zumindest eines der Leitungsschnittstellenmodule Daten aus dem Netzwerkelement heraus übertragen kann, und wobei jedes der Leitungsschnittstellenmodule mit Konfigurationsdaten konfigurierbar ist, welche von einem Controller des Software-definierten Netzwerkes empfangen wurden, wobei das Netzwerkelement ein Verarbeitungssystem (335, 331-334) umfasst welches geeignet ist um zumindest eines der Leitungsschnittstellenmodule gemäß den Konfigurationsdaten zu konfigurieren um zu unterstützen:
- externe Datenweiterleitungsfunktionalität zwischen dem Netzwerkelement und anderen Netzwerkelementen,
**dadurch gekennzeichnet, dass** das Verarbeitungssystem weiterhin geeignet ist um zumindest zwei der Leitungsschnittstellenmodule gemäß den Konfigurationsdaten zu konfigurieren um zu unterstützen:
- interne Datenweiterleitungsfunktionalität innerhalb des Netzwerkelements und zwischen den zumindest zwei Leitungsschnittstellenmodulen, und
- Signalisierungsfunktionalität welche ein Erstes der zumindest zwei Leitungsschnittstellenmodule ermöglicht zumindest ein Anderes der zumindest zwei Leitungsschnittstellenmodule mit Signaldaten zu steuern, welche zumindest teilweise entsprechend den Konfigurationsdaten bestimmt sind und zusätzlich zu von den anderen Netzwerkelementen empfangenen Daten sind wenn das Netzwerkelement entsprechend den Konfigurationsdaten arbeitet.

2. Netzwerkelement gemäß Anspruch 1, wobei das Verarbeitungssystem geeignet ist um das Erste der zumindest zwei Leitungsschnittstellenmodule gemäß den Konfigurationsdaten zu konfigurieren um Metadaten festzulegen um zugreifbar zu sein für das zumindest eine Andere der zumindest zwei Leitungsschnittstellenmodule um das zumindest eine Andere der zumindest zwei Leitungsschnittstellenmodule zu steuern in Antwort auf ein Weiterleiten einer Datenentität entsprechend der internen Datenweiterleitungsfunktionalität, wobei die Metadaten die Datenentität betreffen und die Signaldaten repräsentieren.

3. Netzwerkelement gemäß Anspruch 2, wobei das Verarbeitungssystem geeignet ist um das Erste der zumindest zwei Leitungsschnittstellenmodule gemäß den Konfigurationsdaten zu konfigurieren um die Metadaten an die Datenentität anzuhängen so dass die Metadaten zusammen mit der Datenentität entsprechend der internen Datenweiterleitungsfunktionalität weitergeleitet werden.

4. Netzwerkelement gemäß Anspruch 2, wobei das Verarbeitungssystem geeignet ist um das Erste der zumindest zwei Leitungsschnittstellenmodule gemäß den Konfigurationsdaten zu konfigurieren um die Metadaten in einen Speicher zu legen welcher für das zumindest eine Andere der zumindest zwei Leitungsschnittstellenmodule zugreifbar ist.

5. Netzwerkelement gemäß einem der Ansprüche 1-4, wobei das Verarbeitungssystem geeignet ist um Modul-spezifische Teile von den Konfigurationsdaten zu erkennen, die modul-spezifischen Teile der Konfigurationsdaten entsprechenden Leitungsschnittstellenmodulen zuzuteilen, und jedes der Leitungsschnittstellenmodule gemäß den entsprechenden Modul-spezifischen Teilen der Konfigurationsdaten zu konfigurieren.

6. Netzwerkelement gemäß einem der Ansprüche 1-5, wobei sich das Verarbeitungssystem (335) in einem der Leitungsschnittstellenmodule befindet, geeignet um die anderen Leitungsschnittstellenmodule gemäß den Konfigurationsdaten zu konfigurieren.

7. Netzwerkelement gemäß einem der Ansprüche 1-5, wobei das Verarbeitungssystem (331-334) dezentral in den Leitungsschnittstellenmodulen ist und eines oder mehrere der Leitungsschnittstellenmodule geeignet sind sich selbst gemäß den Konfigurationsdaten zu konfigurieren.

8. Netzwerkelement gemäß einem der Ansprüche 1-7, wobei das Erste der zumindest zwei Leitungsschnittstellenmodule ein Leitungsschnittstellenmodul ist umfassend einen Empfänger zum Empfangen von Daten von außerhalb des Netzwerkelements und einen Sender zum Übertragen von Daten aus dem Netzwerkelement heraus.

9. Netzwerkelement gemäß einem der Ansprüche 1-7, wobei das Erste (321) der zumindest zwei Leitungsschnittstellenmodule eine Eingangsseite eines Leitungsschnittstellenmoduls (326) ist umfassend einen Empfänger zum Empfangen von Daten von außerhalb des Netzwerkelements, und ein Zweites (322) der zumindest zwei Leitungsschnittstellenmodule eine Austrittsseite des Leitungsschnittstellenmoduls ist umfassend einen Sender zum Übertragen von Daten aus dem Netzwerkelement heraus.

10. Netzwerkelement gemäß Anspruch 9, wobei das Verarbeitungssystem geeignet ist um das Zweite der zumindest zwei Leitungsschnittstellenmodule gemäß den Konfigurationsdaten zu konfigurieren um Daten an das Erste der zumindest zwei Leitungsschnittstellenmodule weiterzuleiten in Antwort auf eine Situation in welcher die Daten erachtet werden Verarbeitung zu brauchen bezogen auf die Eingangsseite des Leitungsschnittstellenmodules.

11. Netzwerkelement gemäß einem der Ansprüche 1-11, wobei das Netzwerkelement zumindest eines der folgenden ist: ein Internet Protokoll IP Router, ein MultiProtocol Label Switching MPLS Schalter, ein Paket-optischer-Schalter, ein Ethernet Schalter.

12. Controller (205) zum Konfigurieren eines Netzwerkelements eines Software-definierten Netzwerkes, der Controller aufweisend:
- Ein Verarbeitungssystem (209) zum Bilden von Konfigurationsdaten für das Netzwerkelement, und
- Eine Datenübertragungsschnittstelle (211) zum Übertragen der Konfigurationsdaten an das Netzwerkelement,
wobei die Konfigurationsdaten externe Datenweiterleitungsfunktionalität zwischen dem Netzwerkelement und anderen Netzwerkelementen definieren, **dadurch gekennzeichnet, dass** die Konfigurationsdaten weiterhin definieren:
- Interne Datenweiterleitungsfunktionalität innerhalb des Netzwerkelements und zwischen Leitungsschnittstellenmodulen des Netzwerkelements, und
- Signalisierungsfunktionalität welche zumindest eines der Leitungsschnittstellenmodule ermöglicht zumindest ein anderes der Leitungsschnittstellenmodule mit Signaldaten zu steuern, welche zumindest teilweise entsprechend den Konfigurationsdaten bestimmt sind und zusätzlich zu von den anderen Netzwerkelementen empfangenen Daten sind wenn das Netzwerkelement entsprechend den Konfigurationsdaten arbeitet.

13. Controller gemäß Anspruch 12, wobei das Verarbeitungssystem geeignet ist um Modul-spezifische Teile von den Konfigurationsdaten für die Leitungsschnittstellenmodule des Netzwerkelements zu bilden und die Modul-spezifischen Teile der Konfigurationsdaten mit Entität-Kennzeichen bereitzustellen um dem Netzwerkelement zu ermöglichen die Modul-spezifischen Teile der Konfigurationsdaten entsprechenden Leitungsschnittstellenmodulen zuzuteilen und jedes der Leitungsschnittstellenmodule mit einem passenden Modul-spezifischen Teil der Konfigurationsdaten zu konfigurieren.

14. Verfahren zum Konfigurieren eines Netzwerkelements eines Software-definierten Netzwerkes, das Netzwerkelement umfassend Leitungsschnittstellenmodule, die Daten untereinander übertragen können, wobei zumindest eines der Leitungsschnittstellenmodule Daten von außerhalb des Netzwerkelements empfangen kann, wobei zumindest eines der Leitungsschnittstellenmodule Daten aus dem Netzwerkelement heraus übertragen kann, und wobei jedes der Leitungsschnittstellenmodule mit Konfigurationsdaten konfigurierbar ist, welche von einem Controller des Software-definierten Netzwerkes empfangen wurden, das Verfahren aufweisend:
- Konfigurieren (401) zumindest eines der Leitungsschnittstellenmodule gemäß den Konfigurationsdaten um externe Datenweiterleitungsfunktionalität zwischen dem Netzwerkelement und anderen Netzwerkelementen zu unterstützen,
**dadurch gekennzeichnet, dass** das Verfahren weiterhin ein Konfigurieren (402, 403) zumindest zwei der Leitungsschnittstellenmodule gemäß den Konfigurationsdaten aufweist um zu unterstützen:
- Interne Datenweiterleitungsfunktionalität innerhalb des Netzwerkelements und zwischen den zumindest zwei Leitungsschnittstellenmodulen, und
- Signalisierungsfunktionalität welche ein Erstes der zumindest zwei Leitungsschnittstellenmodule ermöglicht zumindest ein Anderes der zumindest zwei Leitungsschnittstellenmodule mit Signaldaten zu steuern, welche zumindest teilweise entsprechend den Konfigurationsdaten bestimmt sind und zusätzlich zu von den anderen Netzwerkelementen empfangenen Daten sind wenn das Netzwerkelement entsprechend den Konfigurationsdaten arbeitet.

15. Computerprogramm zum Konfigurieren eines Netzwerkelements eines Software-definierten Netzwerkes, das Netzwerkelement umfassend Leitungsschnittstellenmodule, die Daten untereinander übertragen können, wobei zumindest eines der Leitungsschnittstellenmodule Daten von außerhalb des Netzwerkelements empfangen kann, wobei zumindest eines der Leitungsschnittstellenmodule Daten aus dem Netzwerkelement heraus übertragen kann, und wobei jedes der Leitungsschnittstellenmodule mit Konfigurationsdaten konfigurierbar ist, welche von einem Controller des Software-definierten Netzwerkes empfangen wurden, das Computerprogramm aufweisend computerausführbare Anweisungen zum Steuern eines programmierbaren Verarbeitungssystems des Netzwerkelements um zu:
- Konfigurieren zumindest eines der Leitungsschnittstellenmodule entsprechend den Konfigurationsdaten um externe Datenweiterleitungsfunktionalität zwischen dem Netzwerkelement und anderen Netzwerkelementen zu unterstützen,
**dadurch gekennzeichnet, dass** das Computerprogramm weiterhin computerausführbare Anweisungen zum Steuern des programmierbaren Verarbeitungssystems des Netzwerkelements aufweist zum Konfigurieren zumindest zwei der Leitungsschnittstellenmodule entsprechend den Konfigurationsdaten um zu unterstützen:
- interne Datenweiterleitungsfunktionalität innerhalb des Netzwerkelements und zwischen den zumindest zwei Leitungsschnittstellenmodulen, und
- Signalisierungsfunktionalität welche ein Erstes der zumindest zwei Leitungsschnittstellenmodule ermöglicht zumindest ein Anderes der zumindest zwei Leitungsschnittstellenmodule mit Signaldaten zu steuern, welche zumindest teilweise entsprechend den Konfigurationsdaten bestimmt sind und zusätzlich zu von den anderen Netzwerkelementen empfangenen Daten sind wenn das Netzwerkelement entsprechend den Konfigurationsdaten arbeitet.

## Revendications

1. Elément de réseau (301) pour un réseau défini par logiciel, l'élément de réseau comprenant des modules d'interface de ligne (321 à 324) capables de transférer des données les uns entre les autres, au moins l'un des modules d'interface de ligne étant capable de recevoir des données depuis l'extérieur de l'élément de réseau, au moins l'un des modules d'interface de ligne étant capable de transmettre des données hors de l'élément de réseau, et chacun des modules d'interface de ligne étant configurable avec des données de configuration reçues d'une unité de commande du réseau défini par logiciel, dans lequel l'élément de réseau comprend un système de traitement (335, 331 à 334) adapté pour configurer, en conformité avec les données de configuration, au moins l'un des modules d'interface de ligne pour supporter :
- une fonctionnalité d'acheminement de données externe entre l'élément de réseau et d'autres éléments de réseau,
**caractérisé en ce que** le système de traitement est en outre adapté pour configurer, en conformité avec les données de configuration, au moins deux des modules d'interface de ligne pour supporter :
- une fonctionnalité d'acheminement de données interne au sein de l'élément de réseau et entre les au moins deux modules d'interface de ligne, et
- une fonctionnalité de signalisation permettant à un premier des au moins deux modules d'interface de ligne de commander au moins un autre des au moins deux modules d'interface de ligne avec des données de signal qui sont déterminées au moins en partie en conformité avec les données de configuration et qui viennent s'ajouter aux données reçues des autres éléments de réseau lorsque l'élément de réseau fonctionne en conformité avec les données de configuration.

2. Elément de réseau selon la revendication 1, dans lequel le système de traitement est adapté pour configurer, en conformité avec les données de configuration, le premier des au moins deux modules d'interface de ligne pour établir des métadonnées pour qu'elles soient accessibles à l'au moins un autre des au moins deux modules d'interface de ligne de façon à commander au moins un autre des au moins deux modules d'interface de ligne en réponse à l'acheminement d'une entité de données en conformité avec la fonctionnalité d'acheminement de données interne, les métadonnées étant relatives à l'entité de données et représentant les données de signal.

3. Elément de réseau selon la revendication 2, dans lequel le système de traitement est adapté pour configurer, en conformité avec les données de configuration, le premier des au moins deux modules d'interface de ligne pour rattacher les métadonnées à l'entité de données de sorte que les métadonnées soient acheminées conjointement avec l'entité de données en conformité avec la fonctionnalité d'acheminement de données interne.

4. Elément de réseau selon la revendication 2, dans lequel le système de traitement est adapté pour configurer, en conformité avec les données de configuration, le premier des au moins deux modules d'interface de ligne pour placer les métadonnées dans une mémoire accessible à l'au moins un autre des au moins deux modules d'interface de ligne.

5. Elément de réseau selon l'une quelconque des revendications 1 à 4, dans lequel le système de traitement est adapté pour reconnaître des portions spécifiques du module à partir des données de configuration, allouer les portions spécifiques du module des données de configuration à des modules respectifs parmi les modules d'interface de ligne, et configurer chacun des modules d'interface de ligne en conformité avec la portion spécifique du module respective des données de configuration.

6. Elément de réseau selon l'une quelconque des revendications 1 à 5, dans lequel le système de traitement (335) est situé dans un des modules d'interface de ligne adapté pour configurer les autres modules d'interface de ligne en conformité avec les données de configuration.

7. Elément de réseau selon l'une quelconque des revendications 1 à 5, dans lequel le système de traitement (331 à 334) est décentralisé dans les modules d'interface de ligne et un ou plusieurs des modules d'interface de ligne sont adaptés pour se configurer eux-mêmes en conformité avec les données de configuration.

8. Elément de réseau selon l'une quelconque des revendications 1 à 7, dans lequel le premier des au moins deux modules d'interface de ligne est un module d'interface de ligne comprenant un récepteur permettant de recevoir des données depuis l'extérieur de l'élément de réseau et un émetteur permettant d'émettre des données hors de l'élément de réseau.

9. Elément de réseau selon l'une quelconque des revendications 1 à 7, dans lequel le premier (321) des au moins deux modules d'interface de ligne est un côté entrée d'un module d'interface de ligne (326) comprenant un récepteur permettant de recevoir des données depuis l'extérieur de l'élément de réseau, et un second (322) des au moins deux modules d'interface de ligne est un côté sortie du module d'interface de ligne comprenant un émetteur permettant d'émettre des données hors de l'élément de réseau.

10. Elément de réseau selon la revendication 9, dans lequel le système de traitement est adapté pour configurer, en conformité avec les données de configuration, le second des au moins deux modules d'interface de ligne pour acheminer des données vers le premier des au moins deux modules d'interface de ligne en réponse à une situation dans laquelle les données sont jugées comme ayant besoin d'un traitement relatif au côté entrée du module d'interface de ligne.

11. Elément de réseau selon l'une quelconque des revendications 1 à 10, dans lequel l'élément de réseau est au moins l'un des suivants : un routeur de protocole Internet IP, un commutateur de commutation de labels multiprotocole MPLS, un commutateur optique de paquets et un commutateur Ethernet.

12. Unité de commande (205) permettant de configurer un élément de réseau d'un réseau défini par logiciel, l'unité de commande comprenant :
- un système de traitement (209) permettant de former des données de configuration pour l'élément de réseau, et
- une interface de transfert de données (211) permettant de transmettre les données de configuration à l'élément de réseau,
dans laquelle les données de configuration définissent une fonctionnalité d'acheminement de données externe entre l'élément de réseau et d'autres éléments de réseau, **caractérisée en ce que** les données de configuration définissent en outre :
- une fonctionnalité d'acheminement de données interne au sein de l'élément de réseau et entre des modules d'interface de ligne de l'élément de réseau, et
- une fonctionnalité de signalisation permettant à au moins l'un des modules d'interface de ligne de commander au moins un autre des modules d'interface de ligne avec des données de signal qui sont déterminées au moins en partie en conformité avec les données de configuration et qui viennent s'ajouter à des données reçues des autres éléments de réseau lorsque l'élément de réseau fonctionne en conformité avec les données de configuration.

13. Unité de commande selon la revendication 12, dans laquelle le système de traitement est adapté pour former des portions spécifiques du module des données de configuration pour les modules d'interface de ligne de l'élément de réseau et pour fournir les portions spécifiques du module des données de configuration avec des identifiants d'entité de façon à permettre à l'élément de réseau d'allouer les portions spécifiques du module des données de configuration à des modules respectifs des modules d'interface de ligne et configurer chacun des modules d'interface de ligne avec une portion spécifique du module appropriée des données de configuration.

14. Procédé de configuration d'un élément de réseau d'un réseau défini par logiciel, l'élément de réseau comprenant des modules d'interface de ligne capables de transférer des données les uns entre les autres, au moins l'un des modules d'interface de ligne étant capable de recevoir des données depuis l'extérieur de l'élément de réseau, au moins l'un des modules d'interface de ligne étant capable de transmettre des données hors de l'élément de réseau, et chacun des modules d'interface de ligne étant configurable avec des données de configuration reçues d'une unité de commande du réseau défini par logiciel, le procédé comprenant :
- la configuration (401) en conformité avec les données de configuration d'au moins l'un des modules d'interface de ligne pour supporter une fonctionnalité d'acheminement de données externe entre l'élément de réseau et d'autres éléments de réseau,
**caractérisé en ce que** le procédé comprend en outre la configuration (402, 403), en conformité avec les données de configuration, d'au moins deux des modules d'interface de ligne pour supporter :
- une fonctionnalité d'acheminement de données interne au sein de l'élément de réseau et entre les au moins deux modules d'interface de ligne, et
- une fonctionnalité de signalisation permettant à un premier des au moins deux modules d'interface de ligne de commander au moins un autre des au moins deux modules d'interface de ligne avec des données de signal déterminées au moins en partie en conformité avec les données de configuration et qui viennent s'ajouter à des données reçues des autres éléments de réseau lorsque l'élément de réseau fonctionne en conformité avec les données de configuration.

15. Programme d'ordinateur permettant de configurer un élément de réseau d'un réseau défini par logiciel, l'élément de réseau comprenant des modules d'interface de ligne capables de transférer des données les uns entre les autres, au moins l'un des modules d'interface de ligne étant capable de recevoir des données depuis l'extérieur de l'élément de réseau, au moins l'un des modules d'interface de ligne étant capable de transmettre des données hors de l'élément de réseau, et chacun des modules d'interface de ligne étant configurable avec des données de configuration reçues d'une unité de commande du réseau défini par logiciel, le programme d'ordinateur comprenant des instructions exécutables par ordinateur permettant de commander un système de traitement programmable de l'élément de réseau pour :
- configurer, en conformité avec les données de configuration, au moins l'un des modules d'interface de ligne pour supporter une fonctionnalité d'acheminement de données externe entre l'élément de réseau et d'autres éléments de réseau,
**caractérisé en ce que** le programme d'ordinateur comprend en outre des instructions exécutables par ordinateur permettant de commander le système de traitement programmable de l'élément de réseau pour configurer, en conformité avec les données de configuration, au moins deux des modules d'interface de ligne pour supporter :
- une fonctionnalité d'acheminement de données interne au sein de l'élément de réseau et entre les au moins deux modules d'interface de ligne, et
- une fonctionnalité de signalisation permettant à un premier des au moins deux modules d'interface de ligne de commander au moins un autre des au moins deux modules d'interface de ligne avec des données de signal déterminées au moins en partie en conformité avec les données de configuration et qui viennent s'ajouter à des données reçues des autres éléments de réseau lorsque l'élément de réseau fonctionne en conformité avec les données de configuration.
